# EUROPEAN PATENT APPLICATION

(11) **EP 3 851 233 A1**
(43) Date of publication of application: **21.07.2021**
(21) Application number: 21151256.1
(22) Date of filing: 13.01.2021
(51) Int. Cl.: B23B 31/20

(54) **FLEXIBLE COLLET ASSEMBLY WITH LIMITED RADIAL STIFFNESS**

(30) Priority: 16.01.2020 US 202062962143 P; 07.02.2020 US 202062971569 P
(71) Applicant: Schaublin SA, 2800 Delémont (CH)
(72) Inventor: Motschi, René, 4625 Oberbuchsiten (CH)
(74) Representative: AWA Denmark A/S

(57) **Abstract**

A collet (200) having a tubular body (212) that extends from a first end (200A) to a second end (20B). A hoop section (212H) proximate the first end (200A) and extends to an intermediate location (214) between the first end (200A) and the second end (200B). First and second legs (225A, 225B) each extend from the intermediate location (214). The first and second legs (225A, 225B) are spaced apart from each other. A holding section (220) is located proximate the second end (200B) which has by a flange (222) that extends radially inward from an exterior surface of the tubular body (212) and terminates at a clamping surface (203).

## Description

### FIELD OF THE INVENTION

This invention relates to a collet assembly for transmitting a torque with a limited radial clamping force and a reduced radial stiffness and is more particularly related to a collet having two or more flexible legs such as flexible jaw or flaps around a clamping diameter and a ring that limits the radial clamping movement and defines the radial clamping force.

### BACKGROUND

A collet is a device having two or more "jaws" between which an object such as a tool or a workpiece can be positioned. The jaws form a collar around the object. The jaws of the collet are configured to constrict around the object by deflecting radially inward. The jaws may be deflected radially inward by pushing a suitable mechanism (e.g., a collet adapter) around the circumference of the collet. In another type of collet called a draw-in collet, the collet is tapered and drawn into a sleeve (e.g., a collet adapter) by a draw bar to cause the jaws to constrict around the tool or workpiece. Collets are typically fabricated from steel, which allows the jaws to be sufficiently flexible relative to each other to allow the jaws to flex and hold the tool or workpiece.

The collet is held in a clamping device (e.g., a collet adapter and draw bar), which is connected to a shaft that can be rotated, which in turn causes the tool or the workpiece to rotate. In instances in which a tool is clamped in the collet and rotated, the tool is designed to engage or be engaged by a workpiece. In instances in which the workpiece is clamped in the collet and rotated, the workpiece engages or is engaged by a tool.

Usually the collet clamps, centers and orients the workpiece in a certain position, as stable and rigid as possible to prevent the workpiece from moving during machining. Rotation is the only desired movement with a run-out accuracy as precise as possible. In certain applications, the radial stiffness, the orientation and the run-out accuracy of the workpiece is given by a steady rest, a V-block or another similar system in front of the collet. With such a system, the run-out normally given by the collet can be heavily reduced, but only if the collet does not influence or dominate the orientation given by the V-block. Because prior art collets have high radial rigidity, such collets will influence, in an undesirable manner, the orientation and the run-out of the workpiece and dominate the orientation given by the V-block.

The rotational accuracy of the tool or the workpiece affects the process of removing swarf (e.g., metal chips) from the workpiece. In particular, the rotational accuracy of the tool or the workpiece typically depends on the coaxiality between the rotation axis of the clamping diameter in the collet and the orientation given by the V-block. In prior art collets, the clamping diameter undesirably imposes its own orientation and influences or dominates the orientation given by the V-block.

Thus, there is a need for a flexible collet assembly, transmitting mainly a torque and a rotating movement, without forcing the workpiece in an undesired orientation.

### SUMMARY

There is disclosed herein a flexible collet having a tubular body extending from a first axial end to a second axial end. A hoop section of the tubular body proximate the first axial collet end extends axially from the first axial collet end to an intermediate location between the first axial collet end and the second axial collet end. A first axial leg and a second axial leg each extend from the intermediate location to the second axial collet end. The first axial leg and second axial leg spaced apart from each other. A holding section located proximate the second axial collet end. The holding section defined by a flange extending radially inward from an exterior surface of the tubular body and terminating at a clamping surface.

In one embodiment, the flange includes a first flange section extending from the first axial leg and a second flange section extending from the second axial leg, the first flange section and the second flange section spaced apart from each other. At least one of the first flange section and the second flange section having at least one circumferentially extending opening extending axially therethrough.

In one embodiment, the flexible collect further includes a third axial leg extending axially from the intermediate location to the second axial collet end. The first axial leg and the second axial leg spaced apart from one another by a first axial slot. The second axial leg and the third axial leg spaced apart from one another by a second axial slot. The third axial leg and the first axial leg are spaced apart from one another by a third axial slot.

In one embodiment, the flexible collet further includes a third flange section extending from the third axial leg, the first flange section and the second flange section spaced apart from one another by the first axial slot. The second flange section and the third flange section spaced apart from one another by the second axial slot. The third flange section and the first flange section spaced apart from one another by the third axial slot.

In one embodiment, the flexible collet further includes at least one of: the first flange section having a first radial gap extending outwardly from the clamping surface; the second flange section having a second radial gap extending outwardly from the clamping surface; and the third flange section having a third radial gap extending outwardly from the clamping surface.

In one embodiment, at least one circumferentially extending opening includes at least one of: (a) a first circumferential opening in the first flange section and located between and spaced apart from the first axial slot and the third axial slot; (b) a second circumferential opening in the first flange section and extending circumferentially from the first slot towards and terminating prior to the first radial gap; (c) a third circumferential opening in the first flange section and extending circumferentially from the third axial slot towards and terminating prior to the first radial gap; (d) a fourth circumferential opening in the second flange section and located between and spaced apart from the first axial slot and the second axial slot; (e) a fifth circumferential opening in the second flange section and extending circumferentially from the first axial slot towards and terminating prior to the second radial gap; (f) a sixth circumferential opening in the second flange section and extending circumferentially from the second axial slot towards and terminating prior to the second radial gap; (g) a seventh circumferential opening in the third flange section and located between and spaced apart from the second axial slot and the third axial slot; (h) an eighth circumferential opening in the third flange section and extending circumferentially from the second axial slot towards and terminating prior to the third radial gap; and (i) a ninth circumferential opening in the third flange section and extending circumferentially from the third axial slot towards and terminating prior to the third radial gap.

In one embodiment, the first circumferential opening, the fourth circumferential opening and the seventh circumferential opening are located equidistant from the clamping surface.

In one embodiment, the second circumferential opening, the third circumferential opening, the fifth circumferential opening, the sixth circumferential opening, the eighth circumferential opening and the ninth circumferential opening are located equidistant from the clamping surface.

In one embodiment, the first circumferential opening, the fourth circumferential opening and the seventh circumferential opening are located radially outward from the second circumferential opening, the third circumferential opening, the fifth circumferential opening, the sixth circumferential opening, the eighth circumferential opening and the ninth circumferential opening.

In one embodiment, at least one of the first axial leg and the second axial leg have an axial length and the flange having an axial thickness, the axial thickness is less than the axial length.

In one embodiment, the hoop section is annular with a continuous cylindrical first interior surface.

There is disclosed herein a collet assembly for retaining a workpiece. The collet assembly including a collet according to any one of the embodiments described above. The first axial leg and the second axial leg define a second interior surface extending from the intermediate location towards the second collet end. A ring having a ring exterior surface, the ring disposed in the collet bore proximate the flange. In an unclamped state the second interior surface is spaced apart from the ring exterior surface by a first annular gap. In a clamped state the first axial leg and the second axial leg are flexed radially inward such that the second interior surface engages the ring exterior surface so that the first annular gap is reduced to zero to limit the radially inward movement of the first axial leg and the second axial leg and to establish a predetermined force applied to a workpiece held by the first axial leg and the second axial leg such that the workpiece is maintained coaxial with an axis of rotation of the collet.

In one embodiment, the collet assembly further includes an axial limit-stop, the flange having an axial flange-surface facing towards the first axial collet end. The ring positioned between the axial limit-stop and the axial flange-surface to limit axial movement of the ring relative to the axial limit stop and the axial flange-surface.

In one embodiment, the axial limit-stop includes a sleeve defining a sleeve bore extending from a first axial sleeve end to a second axial sleeve end. The sleeve having an exterior circumferential surface defined by a first raised surface, a second raised surface, a first recess and a second recess. The first recess is positioned between the first raised surface and the second raised surface. The first raised surface and the second raised surface engaging a first interior surface of the hoop section. A second annular gap defined between the second recess and the second interior surface, the second annular gap configured to accommodate radially inward flexure of the first axial leg and the second axial leg in a clamped state.

In one embodiment, the collet assembly further includes a first annular gap defined between the first recess and the first interior surface; and an adhesive disposed in the first annular gap to secure the sleeve to the hoop section of the tubular body defined by the collet.

In one embodiment the axial limit-stop includes a pin extending through a radial hole extending through the collet.

In one embodiment, the ring comprises a ring axial end stop that is configured to limit axial movement and establish a predetermined axial position of a work piece in the collet.

In one embodiment, the sleeve comprises a sleeve axial end stop that is configured to limit axial movement and establish a predetermined axial position of a work piece in the collet.

A section of the tubular body proximate to the first end is annular with a continuous cylindrical interior surface extending axially from the first end to an intermediate location between the first end and the second end. A first axial leg extends axially from the intermediate location to the second end. A second axial leg extends axially from the intermediate location to the second end. A third axial leg extends axially from the intermediate location to the second end. The first axial leg and the second axial leg are spaced apart from one another by a first axial slot. The second axial leg and the third axial leg are spaced apart from one another by a second axial slot. The third axial leg and the first axial leg are spaced apart from one another by a third axial slot. The first axial leg, the second axial leg and the third axial leg have an axial length L1. A holding section is located proximate to the second end. The holding section has a flange extending radially inward from an exterior surface of the tubular body and terminating at a clamping surface. The clamping surface extends axially through the flange and has an axial thickness that is less than the axial length L1. The flange has a first flange section extending from the first axial leg, a second flange section extending from the second axial leg and a third flange section extending from the third axial leg. The first flange section and the second flange section are spaced apart from one another by the first axial slot, the second flange section and the third flange section are spaced apart from one another by the second axial slot and the third flange section and the first flange section are spaced apart from one another by the third axial slot. The first flange section has a first radial gap extending outwardly from the clamping surface and terminating in a first circumferential opening located between and spaced apart from the first axial slot and the third axial slot. The first flange section has a second circumferential opening extending circumferentially from the first slot towards and terminating prior to the first radial gap. A third circumferential opening extends circumferentially from the third axial slot towards and terminating prior to the first radial gap. The second flange section has a second radial gap extending outwardly from the clamping surface and terminating in a fourth circumferential opening located between and spaced apart from the first axial slot and the second axial slot. The second flange section has a fifth circumferential opening extending circumferentially from the second axial slot towards and terminating prior to the second radial gap. A sixth circumferential opening extends circumferentially from the second axial slot towards and terminating prior to the second radial gap. The third flange section has a third radial gap extending outwardly from the clamping surface and terminating in a seventh circumferential opening located between and spaced apart from the second axial slot and the third axial slot. The third flange section has an eighth circumferential opening extending circumferentially from the second axial slot towards and terminating prior to the third radial gap. A ninth circumferential opening extends circumferentially from the third axial slot towards and terminating prior to the second radial gap.

In one embodiment, the first circumferential opening, the fourth circumferential opening and the seventh circumferential opening are located equidistant from the clamping surface.

In one embodiment, the second circumferential opening, the third circumferential opening, the fifth circumferential opening, the sixth circumferential opening, the eighth circumferential opening and the ninth circumferential opening are located equidistant from the clamping surface.

In one embodiment, the first circumferential opening, the fourth circumferential opening and the seventh circumferential opening are located radially outward from the second circumferential opening, the third circumferential opening, the fifth circumferential opening, the sixth circumferential opening, the eighth circumferential opening and the ninth circumferential opening.

There is also disclosed herein a flexible collet having a tubular body extending from a first axial end to a second axial end. A section of the tubular body proximate to the first end is annular with a continuous cylindrical interior surface extending axially from the first end to an intermediate location between the first end and the second end. A first axial leg extends axially from the intermediate location to the second end, a second axial leg extends axially from the intermediate location to the second end and in some embodiments a third axial leg extends axially from the intermediate location to the second end. The first axial leg and the second axial leg are spaced apart from one another by a first axial slot. The first axial leg and the second axial leg have an axial length. A holding section is located proximate to the second end. The holding section has a flange extending radially inward from an exterior surface of the tubular body and terminating at a clamping surface. The clamping surface extends axially through the flange and has an axial thickness that is less than the axial length. The flange has a first flange section extending from the first axial leg and a second flange section extending from the second axial leg. The first flange section and the second flange section are spaced apart from one another by the first axial slot and the second axial slot. The first flange section has a first radial gap extending outwardly from a clamping surface and terminating in a first circumferential opening located between and spaced apart from the first axial slot and the second axial slot. The first flange section has a second circumferential opening extending circumferentially from the first slot towards and terminating prior to the first radial gap. A third circumferential opening extends circumferentially from the second axial slot towards and terminating prior to the first radial gap. The second flange section has a second radial gap extending outwardly from the clamping surface and terminating in a fourth circumferential opening located between and spaced apart from the first axial slot and the second axial slot. The second flange section has a fifth circumferential opening extending circumferentially from the first axial slot towards and terminating prior to the second radial gap. A sixth circumferential opening extends circumferentially from the second axial slot towards and terminating prior to the second radial gap.

In one embodiment of the flexible collet, the first circumferential opening and the fourth circumferential opening are located equidistant from the clamping surface.

In one embodiment of the flexible collet, the second circumferential opening, the third circumferential opening, the fifth circumferential opening and the sixth circumferential opening are located equidistant from the clamping surface.

In one embodiment of the flexible collet, the first circumferential opening and the fourth circumferential opening are located radially outward from the second circumferential opening, the third circumferential opening, the fifth circumferential opening and the sixth circumferential opening.

There is also disclosed herein a collet assembly for retaining a workpiece. The collet assembly includes a collet enclosing a sleeve and a ring. The collet has a collet bore extending from a first end to a second end that defines a through bore. The sleeve defines a sleeve bore extending from a first sleeve end to a second sleeve end. The sleeve has an exterior circumferential surface engaging the collet bore proximate to the first end with a second radial gap therebetween. The second radial gap allows a radial clamping movement of the collet. The ring defines a ring bore extending from a first ring end to a second ring end. The ring has an exterior circumferential surface engaging the collet bore proximate to the second end with a first radial gap therebetween. The first radial gap limits the radial clamping movement of the collet and defines a clamping force transmitted to the workpiece. The ring bore and the sleeve bore define the through bore. The collet transmits the clamping force to the workpiece to transmit a force exerted on the workpiece into a rotational torque force on the collet assembly.

In one embodiment of the collet assembly, the collet has a flexible head with one or more first frontal openings and one or more second frontal openings and the collet has one or more flexible legs. The one or more first frontal openings and one or more second frontal openings are each disposed proximate to the one or more flexible legs of the collet.

In one embodiment of the collet assembly, the collet has a first back bore diameter that limits a radial clamping movement of the collet in conjunction with the ring.

In one embodiment of the collet assembly, reducing the first radial gap reduces a clamping stiffness of the collet assembly.

In one embodiment, the collet assembly includes a pin. The ring is axially disposed between a rear head face of the collet and a cylindrical surface of the pin.

There is also disclosed herein a collet assembly for retaining a workpiece. The collet assembly includes a collet having a sleeve retained within the collet. The collet has reduced radial stiffness and reduced orientation influence on the workpiece. The collet transmits a force to the workpiece that is predominantly a torque force.

In one embodiment of the collet assembly for retaining a workpiece, the collet transforms a radial clamping force into a radial compression on a flexible head of the collet. The radial compression on the flexible head generates a clamping force on the workpiece and the collet deviates a supplement radial clamping force on the ring through a first back bore diameter of the collet and an end stop diameter of the ring.

In one embodiment of the collet assembly for retaining a workpiece, the collet assembly includes a ring defining a through bore within the collet. The ring is disposed proximate to the sleeve.

In one embodiment of the collet assembly for retaining a workpiece, the collet is a collet attachment.

In one embodiment of the collet assembly for retaining a workpiece, the collet assembly includes a pin.

In one embodiment of the collet assembly for retaining a workpiece, the collet has a flexible head including one or more first frontal openings and one or more second frontal openings and the collet has one or more flexible legs. The one or more first frontal openings and one or more second frontal openings are disposed on the one or more flexible legs of the collet.

In one embodiment of the collet assembly for retaining a workpiece, the collet has a radially flexible head.

In one embodiment of the collet assembly for retaining a workpiece, the collet has a first back bore diameter that limits a radial clamping movement of the collet.

In one embodiment of the collet assembly for retaining a workpiece, reducing the first radial gap reduces a clamping stiffness of the collet assembly.

In one embodiment of the collet assembly for retaining a workpiece, the collet is a dead length collet.

In one embodiment of the collet assembly for retaining a workpiece, the clamping diameter has a cross section defined by an eccentric circle, a square, or a hexagon.

In one embodiment of the collet assembly for retaining a workpiece, an axial clamping movement or an axial clamping force of a clamping device of a machine tool controls a radial clamping movement of the collet.

In one embodiment of the collet assembly for retaining a workpiece, the ring has an end stop diameter that limits a radial clamping movement of the collet.

In one embodiment of the collet assembly for retaining a workpiece, the ring is axially disposed between a rear head face of the collet and a third axial face of the sleeve.

In one embodiment, the collet assembly for retaining a workpiece includes a pin. The ring is axially disposed between a rear head face of the collet and a cylindrical surface of the pin.

In one embodiment, the collet assembly for retaining a workpiece includes a ring having a first axial face within the collet. The ring is disposed proximate to the sleeve and the first axial face, providing an axial end-stop for the ring.

In one embodiment of the collet assembly for retaining a workpiece, the sleeve has a second axial face within the collet. The second axial face provides an axial end-stop for the ring.

There is also disclosed herein a method of transmitting a force using a collet assembly. The method includes limiting radial stiffness of the collet assembly, reducing orientation influence on a workpiece and transmitting a force to the workpiece in which the force is a torque force.

In one embodiment, the method of transmitting a force using a collet assembly also includes transforming an axial movement into a radial movement or transforming an axial force into a radial force and controlling the radial clamping force by flexibly deforming a head of the collet.

### BRIEF DESCRIPTION OF THE DRAWINGS

FIG. 1A is a perspective view of a flexible collet assembly;
FIG. 1B is a cross sectional view taken across section 1B-1B of FIG. 1A;
FIG. 2A is a cross sectional view of the flexible collet assembly of FIG. 1A;
FIG. 2B is a cross sectional view of the flexible collet assembly of FIG. 1A;
FIG. 2C is a cross sectional view of an embodiment of a flexible collet assembly with a pin arrangement;
FIG. 2D is a cross sectional view taken across section 2D-2D of FIG. 2B but shown in a clamped state;
FIG. 2E is a cross sectional view of an embodiment of a flexible collet assembly with a ring axially retained by a pin and the ring with a partial bore and an end-stop for axially limiting movement of a work piece;
FIG. 2F is a cross sectional view of an embodiment of the present invention shown with a solid sleeve;
FIG. 2G cross sectional view of an embodiment of the present invention shown with a solid sleeve that has a partial bore and end-stop for axially limiting movement of a work piece therein;
FIG. 2H is a cross sectional view of an embodiment of a flexible collet assembly with a ring axially retained by a hollow sleeve and the ring with a partial bore and an end-stop for axially limiting movement of a work piece;
FIG. 3A is a front view of the collet assembly of FIG. 1A;
FIG. 3B is an enlarged front view of a central portion of the collet assembly of FIG. 3A shown in an unclamped state;
FIG. 3C is an enlarged front view of a central portion of the collet assembly of FIG. 3A shown in a clamped state;
FIG. 4 is a cross sectional view of the collet of FIG. 2A;
FIG. 5 is a front view of the collet of FIG. 2A;
FIG. 6 is a perspective view of a head portion of the collet of FIG. 2A;
FIG. 7A is a perspective view of the hollow ring of FIG. 2A;
FIG. 7B is a perspective view of the ring of FIGS. 2E and 2H;

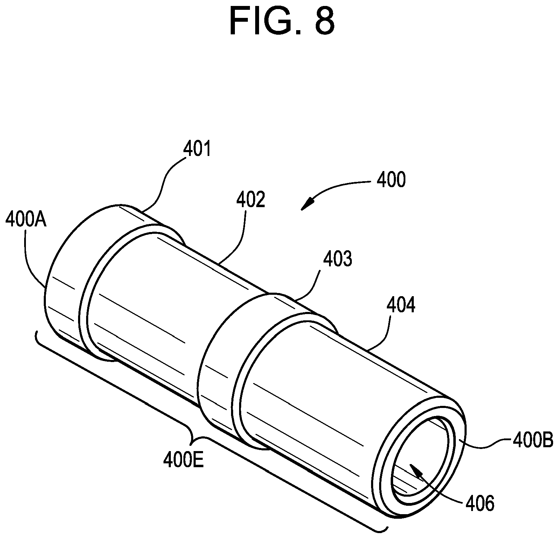

FIG. 8 is a perspective view of the sleeve of FIG. 2A;
FIG. 9 is a perspective view of the sleeve of FIG. 2F; and
FIG. 10 is a perspective view of the sleeve of FIG. 2G.

### DETAILED DESCRIPTION

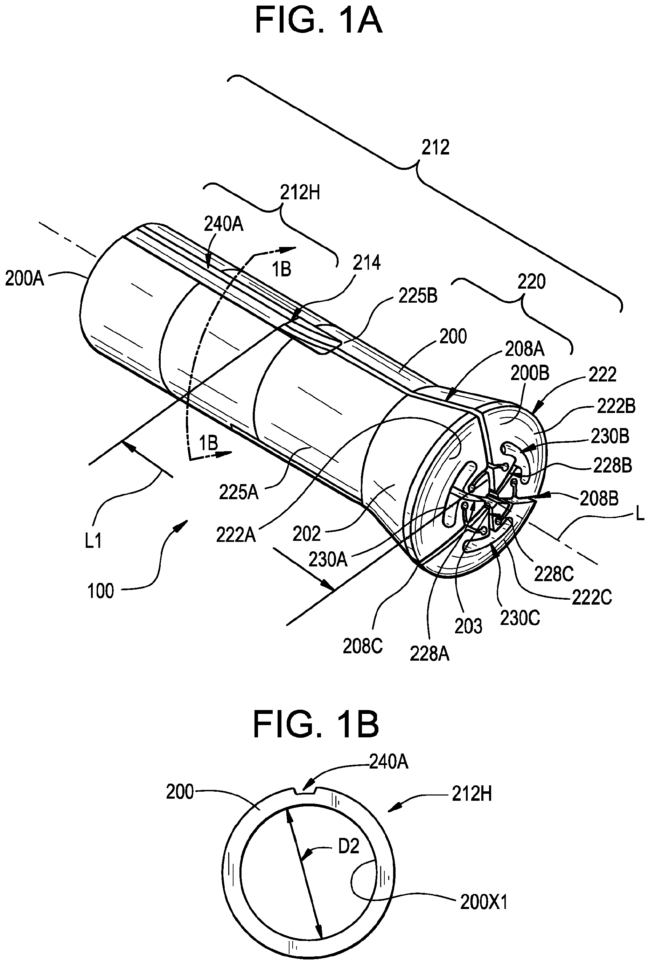

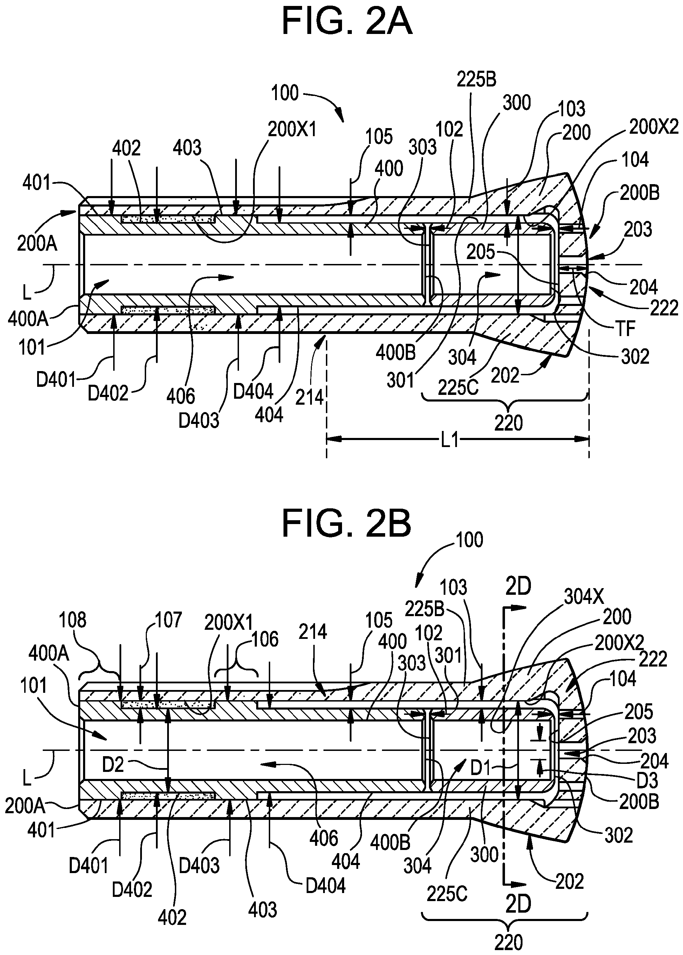

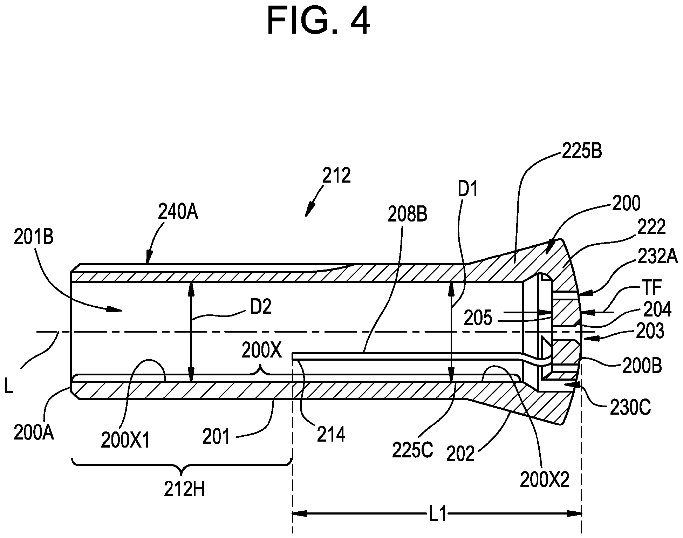

As shown in FIG. 1A a collet assembly generally designated by the numeral 100. The flexible collet assembly 100 includes a flexible collet 200 which is in the form of a generally tubular body 212 that extends from a first axial collet end 200A to a second axial collet end 200B thereof and is concentric about a longitudinal axis L. The tubular body 212 has a hoop section 212H proximate the first axial collet end 200A. As best shown in FIG. 1B, the hoop section 212H is annular with a continuous cylindrical first interior surface 200X1 having an inside diameter D2 (see FIG. 2B) which is slightly greater than the outside diameters D401 and D403 of the sleeve 400 so that the sleeve if tightly supported and guided concentrically in the collet 200. As shown in FIG. 1A, the hoop section 212H extends axially from the first axial collet end 200A to an intermediate location 214 between the first axial collet end 200A and the second axial collet end 200B. As shown in FIG. 4, the collet 200 has an exterior cylindrical surface that defines a guiding diameter 201 for centering the collet 200 precisely in a collet adapter (not shown) in clamped and unclamped position.

As shown in FIG. 1A, the tubular body 212 has a first axial leg 225A, a second axial leg 225B and a third axial leg 225C each of which extend from the intermediate location 214 to the second axial collet end 200B. The first axial leg 225A, the second axial leg 225B and the third axial leg 225C are spaced apart from each other. The first axial leg 225A and the second axial leg 225B are spaced apart from one another by a first axial slot 208A. The second axial leg 225B and the third axial leg 225C are spaced apart from one another by a second axial slot 208B. The third axial leg 225C and the first axial leg 225A are spaced apart from one another by a third axial slot 208C.

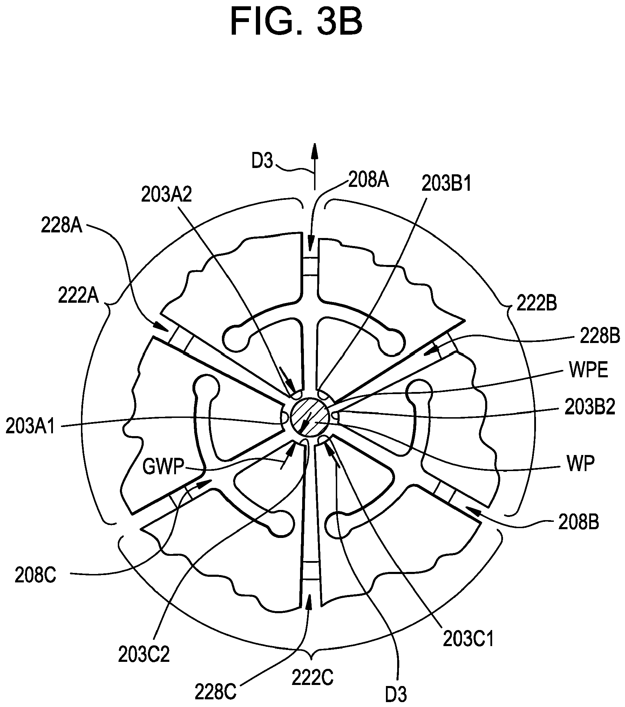

As shown in FIG. 1A, the collet 200 has a holding section 220 formed on the tubular body 212. The holding section 220 includes a tapered exterior surface that defines a clamping taper 202 which is located proximate the second axial collet end 200B. The holding section 220 includes a split flange 222 that extends radially inward from the clamping taper 202 of the tubular body 212 and terminates at a clamping surface 203, for example, a radially inward facing cylindrical shaped surface. As shown in FIGS. 2B and 3B, the flange 222 has a first flange section 222A that extends from the first axial leg, 225A, a second flange section 222B that extends from the second axial leg 225B and a third flange section 222C that extends from the third axial leg 225C. The first flange section 222A and the second flange section 222B are spaced apart from each other by the first axial slot 208A, the second flange section 222B and the third flange section 222C are spaced apart from each other by the second axial slot 208B and the first flange section 222A and the third flange section 222C are spaced apart from each other by the third axial slot 208C. As shown in FIGS. 2A, 2B and 4 the split flange 222 has an axial flange-surface 205 that faces toward the first axial collet end 200A and is commonly referred to by the inventors as a rear head face. The axial flange-surface 205 is present on each of the flange sections, e.g., the first flange section 222A, the second flange section 222B and the third flange section 222C. The clamping surface 203 has a lead-in taper 204 (e.g., a chamfer) that facilitates installation of a workpiece WP (see FIG. 3B) in the clamping surface 203. While the lead-in taper 204 is shown and described as being a chamfer, examples are not limited in this regard as other configurations are incorporated herein including but not limited to the lead-in taper 204 being an arcuate radiused shape.

While the tubular body 212 is shown and described as having the first axial leg 225A with the first flange section 222A, the second axial leg 225B with the second flange section 222B and the third axial leg 225B with the third flange section 222C, examples are not limited in this regard as other configurations are included, for example, a tubular body with only two axial legs with each having a flange section and a tubular body with more than three axial legs with each having a flange section. While the split flange 222 is described as terminating at the clamping surface 203, examples are not limited in this regard as the present invention includes other configurations including but not limited to the clamping surface 203 (e.g., radially inward facing surface of a cylindrical bore) being replaced with a bore having an eccentric circle cross-section, a square cross-section or a hexagonal cross section.

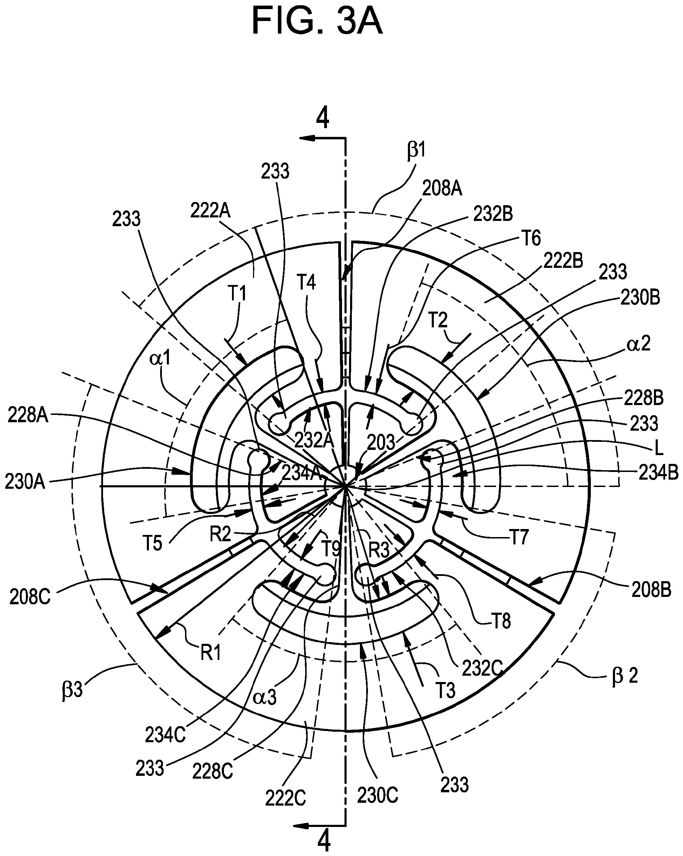

As best shown in FIG. 3A, the first flange section 222A has a first radial gap 228A that extends radially outwardly from the clamping surface 203 and axially through the first flange section 222A from the second axial collet end 200B to the axial flange-surface 205. The second flange section 222B has a second radial gap 228B that extends radially outwardly from the clamping surface 203 and axially through the second flange section 222B from the second axial collet end 200B to the axial flange-surface 205. The third flange section 222C has a third radial gap 228C that extends radially outwardly from the clamping surface 203 and axially through the third flange section 222C from the second axial collet end 200B to the axial flange-surface 205.

FIG. 3A illustrates a first circumferentially extending opening 230A in the first flange section 222A. The first circumferentially extending opening 230A is located between and spaced apart from the first axial slot 208A and the third axial slot 208C. The first radial gap 228A extends into and terminates in the first circumferentially extending opening 230A. The first circumferentially extending opening 230A extends axially through the first flange section 222A from the second axial collet end 200B to the axial flange-surface 205. FIG. 3A illustrates a second circumferentially extending opening 232A in the first flange section 222A. The second circumferentially extending opening 232A extends circumferentially from the first slot 208A towards and terminating prior to the first radial gap 228A. The second circumferential extending opening 232A extends axially through the first flange section 222A from the second axial collet end 200B to the axial flange-surface 205. FIG. 3A illustrates a third circumferentially extending opening 234A in the first flange section 222A. The third circumferentially extending opening 234A extends circumferentially from the third axial slot 208C towards and terminating prior to the first radial gap 228A. The third circumferentially extending opening 234A extends axially through the first flange section 222A from the second axial collet end 200B to the axial flange-surface 205.

While the first flange section 222A is shown and described as having the first circumferentially extending opening 230A and the second circumferentially extending opening 232A and the third circumferentially extending opening 234A, examples are not limited in this regard as other configurations are included for example, the first flange section 222A has fewer circumferentially extending openings than shown or described, *e.g.,* the first flange section 222A has no circumferentially extending openings; the first flange section 222A has the first circumferentially extending opening 230A; the first flange section 222A has the first circumferentially extending opening 230A and either the second circumferentially extending opening 232A or the third circumferentially extending opening 234A; the first flange section 222A has the second circumferentially extending opening 232A and the third circumferentially extending opening 234A; or the first flange section 222A has either the second circumferentially extending opening 232A or the third circumferentially extending opening 234A.

FIG. 3A illustrates a fourth circumferentially extending opening 230B in the second flange section 222B. The fourth circumferentially extending opening 230B is located between and spaced apart from the first axial slot 208A and the second axial slot 208B. The second radial gap 228B extends into and terminates in the fourth circumferentially extending opening 230B. The fourth circumferentially extending opening 230B extends axially through the second flange section 222B from the second axial collet end 200B to the axial flange-surface 205. FIG. 3A illustrates a fifth circumferentially extending opening 232B in the second flange section 222B. The fifth circumferentially extending opening 232B extends circumferentially from the first axial slot 208A towards and terminating prior to the second radial gap 228B. The fifth circumferentially extending opening 232B extends axially through the second flange section 222B from the second axial collet end 200B to the axial flange-surface 205. FIG. 3A illustrates a sixth circumferentially extending opening 234B in the second flange section 222B. The sixth circumferentially extending opening 234B extends circumferentially from the second axial slot 208B towards and terminating prior to the second radial gap 228B. The sixth circumferentially extending opening 234B extends axially through the second flange section 222B from the second axial collet end 200B to the axial flange-surface 205.

While the second flange section 222B is shown and described as having the fourth circumferentially extending opening 230B and the fifth circumferentially extending opening 232B and the sixth circumferentially extending opening 234B, examples are not limited in this regard as other configurations are included, for example, the second flange section 222B has fewer circumferentially extending openings than shown or described, *e.g.,* the second flange section 222B has no circumferentially extending openings; the second flange section 222B has the fourth circumferentially extending opening 230B; the second flange section 222B has the fourth circumferentially extending opening 230B and either the fifth circumferentially extending opening 232B or the sixth circumferentially extending opening 234B; the second flange section 222B has the fifth circumferentially extending opening 232B and the sixth circumferentially extending opening 234B; or the second flange section 222B has either the fifth circumferentially extending opening 232B or the sixth circumferentially extending opening 234B.

FIG. 3A illustrates a seventh circumferentially extending opening 230C in the third flange section 222C. The seventh circumferentially extending opening 230C is located between and spaced apart from the second axial slot 208B and the third axial slot 208C. The third radial gap 228C extends into and terminates in the seventh circumferentially extending opening 230C. The seventh circumferentially extending opening 230C extends axially through the third flange section 222C from the second axial collet end 200B to the axial flange-surface 205. FIG. 3A illustrates an eighth circumferentially extending opening 232C in the third flange section 222C. The eighth circumferentially extending opening 232C extends circumferentially from the second axial slot (208B) towards and terminating prior to the third radial gap 228C. The eighth circumferentially extending opening 232C extends axially through the third flange section 222C from the second axial collet end 200B to the axial flange-surface 205. FIG. 3A illustrates a ninth circumferentially extending opening 234C in the third flange section 222C. The ninth circumferentially extending opening 234C extends circumferentially from the third axial slot 208C towards and terminating prior to the third radial gap 228C. The ninth circumferentially extending opening 234C extends axially through the third flange section 222C from the second axial collet end 200B to the axial flange-surface 205.

While the third flange section 222C is shown and described as having the seventh circumferentially extending opening 230C and the eighth circumferentially extending opening 232C and the ninth circumferentially extending opening 234C, examples are not limited in this regard as other configurations are included, for example, the third flange section 222C has fewer circumferentially extending openings than shown or described, *e.g.,* third flange section 222C has no circumferentially extending openings; third flange section 222C has the seventh circumferentially extending opening 230C; the third flange section 222C has the seventh circumferentially extending opening 230C and either the eighth circumferentially extending opening 232C or the ninth circumferentially extending opening 234C; the third flange section 222C has the eighth circumferentially extending opening 232C and the ninth circumferentially extending opening 234C; or the third flange section 222C has either the eighth circumferentially extending opening 232C or the ninth circumferentially extending opening 234C.

While there are nine circumferentially extending openings in the split flange 222 are shown and described, examples are not limited in this regard as other configurations are included, for example, less than nine or more than nine circumferentially extending openings in the split flange 222 that extend partially or completely axially through the third flange section 222C from the second axial collet end 200B to the axial flange-surface 205 or the circumferentially openings have axial or radial tapers or uniform or non-uniform contours.

As shown in FIG. 1A, the first axial leg 225A and the second axial leg 225B each have an axial length L1. As shown in FIG. 4, the third axial leg 225C also has the axial length L1. The axial length L1 of the first axial leg 225A, the second axial leg 225B and the third axial leg 225C are equal in magnitude. As shown in FIG. 4, the split flange 222 has an axial thickness TF. The axial thickness TF is less than the axial length L1.

As shown in FIGS. 3A, 5 and 6, the first circumferential opening 230A, the fourth circumferential opening 230B and the seventh circumferential opening 230C are located equidistant from the clamping surface 203 and are concentric about the longitudinal axis L.

As shown in FIGS. 3A, 5 and 6, the second circumferential opening 232A, the third circumferential opening 234A, the fifth circumferential opening 232B, the sixth circumferential opening 234B, the eighth circumferential opening 232C and the ninth circumferential opening 234C are located equidistant from the clamping surface 203 and are concentric about the longitudinal axis L.

As shown in FIGS. 3A, 5 and 6, the first circumferential opening 230A, the fourth circumferential opening 230B and the seventh circumferential opening 230C are located radially outward from the second circumferential opening 232A, the third circumferential opening 234A, the fifth circumferential opening 232B, the sixth circumferential opening 234B, the eighth circumferential opening 232C and the ninth circumferential opening 234C. However, examples are not limited in this regard as it is within the scope of the instant invention to have the second circumferential opening 232A, the third circumferential opening 234A, the fifth circumferential opening 232B, the sixth circumferential opening 234B, the eighth circumferential opening 232C and the ninth circumferential opening 234C located radially outward from the first circumferential opening 230A, the fourth circumferential opening 230B and the seventh circumferential opening 230C.

As shown in FIG. 1A, the collet 200 has an anti-rotation slot 240A formed on the tubular body 212. The anti-rotation slot 240A extends from the first axial collet end 200A and terminates between the intermediate location 214 and the second axial collet end 200B. The anti-rotation slot 240A is shown aligned with the first axial slot 208A. While one anti-rotation slot 240A is shown and described, examples are not limited in this regard as other configurations are included, for example, an anti-rotation slot aligned with the second axial slot 208B, an anti-rotation slot aligned with the third axial slot 208C and/or one or more anti-rotation slots positioned between the first axial slot 208A and the second axial slot 208B, one or more anti-rotation slots positioned between the second axial slot 208B and the third axial slot 208C and one or more anti-rotation slots positioned between the first axial slot 208A and the third axial slot 208C, and combinations thereof.

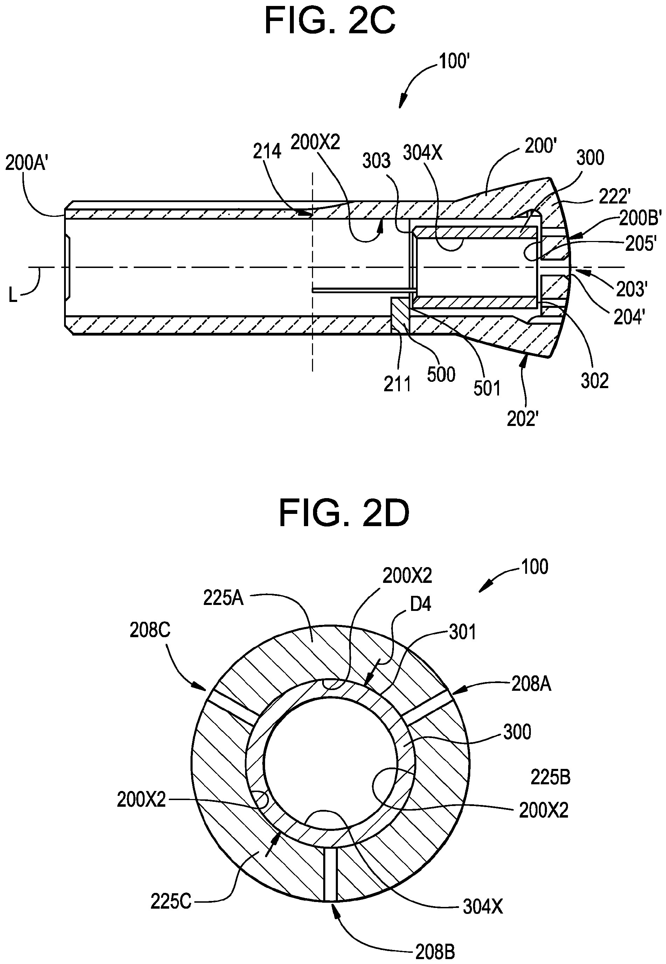

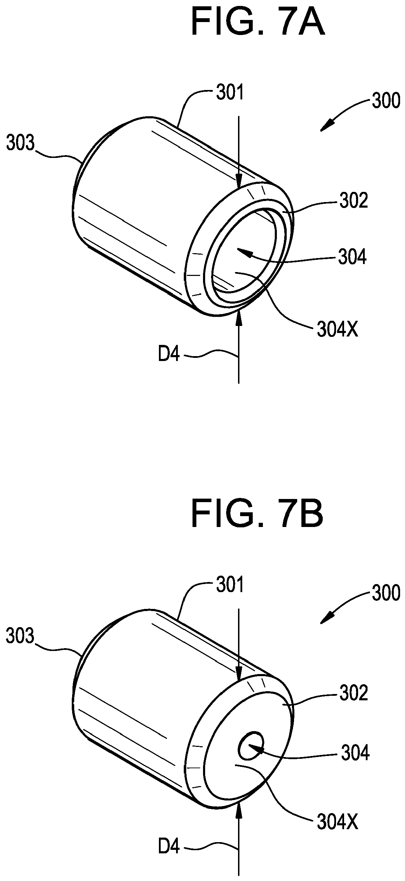

As shown in FIGS. 2B and 4 the second axial leg 225B and the third axial leg 225C have a second interior surface 200X2 that extends from the intermediate location 214 towards the second axial collet end 200B. Likewise, the first axial leg 225A has the second interior surface 200X2 that extends from the intermediate location 214 towards the second axial collet end 200B. The second interior surface 200X2 has an inside diameter 206 (e.g., a back bore diameter). As shown in FIG. 2B, the collet assembly 100 includes a ring 300 that is disposed in the collet bore 201B (see FIG. 4) proximate the flange 222. As best shown in FIG. 7, the ring 300 has an interior surface 304X that defines a ring bore 304 (i.e., ring through bore) that extends from a first ring end 302 to a second ring end 303 thereof. The ring 300 has a ring exterior surface 301 that has an outside diameter D4 (see FIG. 2D). In an unclamped state the second interior surface 200X2 is generally cylindrical and is spaced apart from the ring exterior surface 301 by a first annular gap 103, as shown in FIG. 2B.

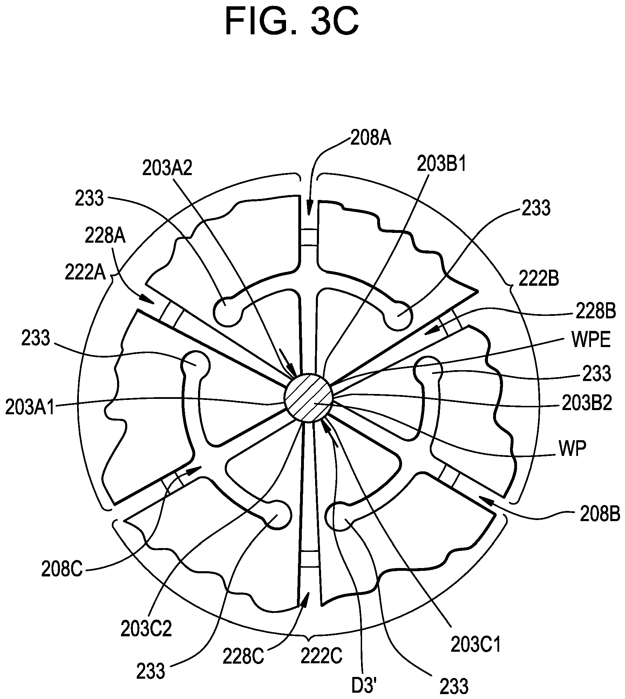

As shown in FIG. 2D, in a clamped state the second interior surface 200X2 is generally conically shaped. In the clamped state the first axial leg 225A, the second axial leg 225B and the third axial leg 225C are flexed radially inward such that a portion of the second interior surface 200X2 engages the ring exterior surface 301 so that the first annular gap 103 is reduced to zero to limit the radially inward movement of the first axial leg 225A, the second axial leg 225B and the third axial leg 225C and to establish a predetermined force applied to a workpiece WP (see FIG. 3C) held by the first axial leg 225A and the second axial leg 225B such that the workpiece WP is maintained coaxial with an axis of rotation of the collet 200.

As shown in FIG. 2B, the collet assembly 100 includes an axial limit-stop that is illustrated in the form of a sleeve 400. As shown in FIG. 7, the sleeve has a sleeve bore 406 (i.e., through bore) extending from a first axial sleeve end 400A to a second axial sleeve end 400B. The sleeve 400 has an exterior circumferential surface 400E that is defined by a first raised surface 401, a second raised surface 403, a first recess 402 and a second recess 404. The first raised surface 401 extends circumferentially continuously around the sleeve 400 and extends axially from the first axial sleeve end 400A towards the second axial sleeve end 400B. The first recess 402 extends axially away from the first raised surface 401 toward the second axial sleeve end 400B and is positioned between the first raised surface 401 and the second raised surface 403. The second raised surface 403 extends circumferentially continuously around the sleeve 400 and extends axially from the first recess 402 towards the second axial sleeve end 400B. The second recess 404 extends axially from the second raised surface 403 and terminates at the second axial sleeve end 400B.

As shown in FIG, 2B, the first raised surface 410 has an outside diameter D401. The first recess 402 has an outside diameter D402. The second raised surface 403 has an outside diameter D403. The second recess 404 has an outside diameter D404. The outside diameter D401 and the outside diameter D403 are about equal in magnitude to one another. The outside diameter D401 and the outside diameter D403 are greater than the outside diameter D402 and the outside diameter D404. The outside diameter D402 and the outside diameter D404 are about equal in magnitude to one another.

As shown in FIG. 2B, the sleeve 400 is disposed in the collet bore 201B (see FIG. 4) such that the first raised surface 401 engages the first interior surface 200X1 of the collet 200 along a cylindrical guide zone 108 and the second raised surface 403 engages the first interior surface 200X1 of the collet 200 along a cylindrical guide zone 106. The inside diameter 207 (e.g., a back bore diameter) of the first interior surface 200X1 is of a magnitude about equal to that of the outside diameter D401 and the outside diameter D403 of the first raised surface 401 and the second raised surface 403, respectively. The first recess 402 is spaced apart from the first interior surface 200X1 thereby forming an annular gap 107. An adhesive 107A is disposed in the annular gap 107 to secure the sleeve 400 to the hoop section 212H of the tubular body 212 defined by the collet 200.

As shown in FIGS. 2A and 2B, the second recess 404 is spaced apart from the second interior surface 200X2 that has an inside diameter D1 and thereby forms an annular gap 105. The annular gap 105 is configured to accommodate radially inward flexure of the first axial leg 225A, the second axial leg 225B and the third axial leg 225C when moving from the unclamped state to the clamped state.

The first axial sleeve end 400A of the sleeve 400 is flush with the first axial collet end 200A of the collet 200. The ring 300 is positioned in the collet bore 201B (see FIG. 4) between the sleeve 400 (i.e., axial limit-stop) and the axial flange-surface 205 to limit axial movement of the ring 300 relative to the sleeve 400 and the axial flange-surface 205.

The collet 200' illustrated in FIG. 2C has a flange 222' that is configured similar to that shown and described for FIGS. 2A, 2B, 3 and 4. For example, the collet 200' has a split flange 222' that extends radially inward from a clamping taper 202' of the tubular body 212' and terminates at a clamping surface 203' proximate the second axial end 200B of the collet 200'. The split flange 222' has an axial flange-surface 205' that faces toward the first axial collet end 200A' and away from the second axial collet end 200B'. The clamping surface 203' has a lead in-taper 204' that facilitates installation of a workpiece WP (see FIG. 3B) in the clamping surface 203'. The collet 200' has a radial hole 211 extending through the surface thereof. The collet assembly 100' includes a pin 500 (i.e., axial limit-stop) disposed in (e.g., press fit or screwed into) the radial hole 211. The ring 300 is axially retained between an axial flange-surface 205' of the collet 200' and a cylindrical surface 501 of the pin 500.

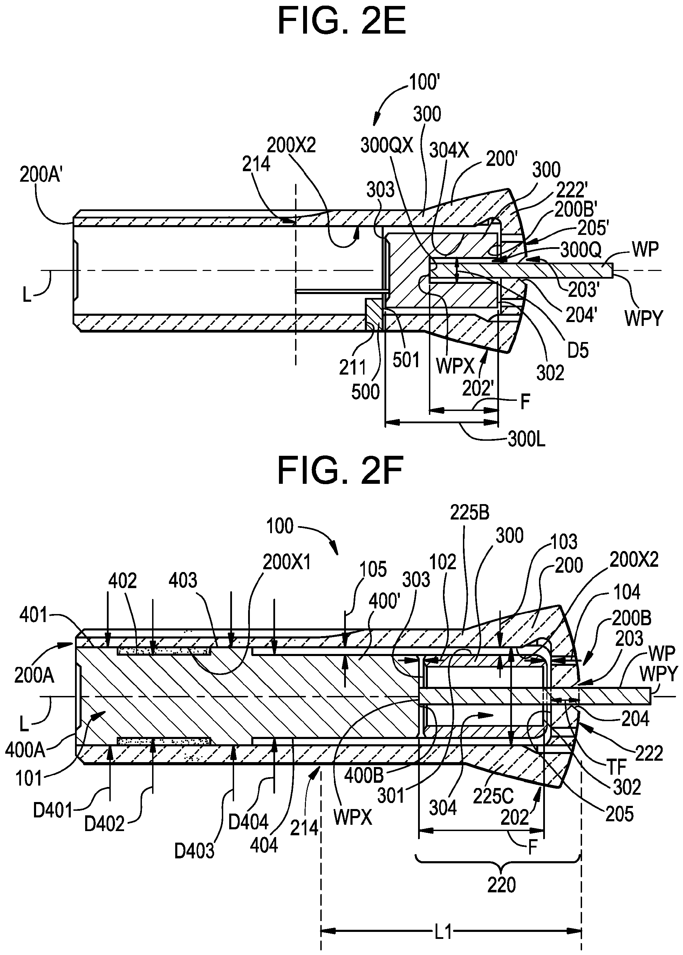

The collet 200' illustrated in FIG. 2E is configured similar to that shown and described for FIG. 2C except that the collet 200' includes ring 300 that has a work piece receiving bore 300Q extending axially therein and terminating at a ring axial end stop 300QX that is configured to limit axial movement of a work piece WP disposed in the work piece receiving bore 300Q. The work piece receiving bore 300Q has an inside diameter D5 that is greater than or equal to the inside diameter D3 of the clamping surface 203. The work piece WP extends from a first axial end WPX to a second axial end WPY. The first axial end WPX abuts the ring axial end stop 300QX of the ring 300 to limit axial movement of the work piece WP and to establish a predetermined axial position of the work piece WP relative to the collet 200'. The work piece receiving bore 300Q extends a depth F axially into the ring 300 from the first ring end 302 towards the second ring end 303 and terminating at the ring axial end stop 300QX. The axial depth F has a magnitude of zero to one hundred percent of an overall axial length 300L of the ring 300. For example, when the axial depth F is equal to one hundred percent of the overall axial length 300L of the ring 300, the work piece receiving bore 300Q extends entirely through the ring 300 and is equivalent to the ring bore 304 shown in FIG. 2A. When the axial depth F is equal to zero percent of the overall axial length 300L of the ring 300, the work piece receiving bore 300Q is eliminated and the ring 300 is a solid cylinder.

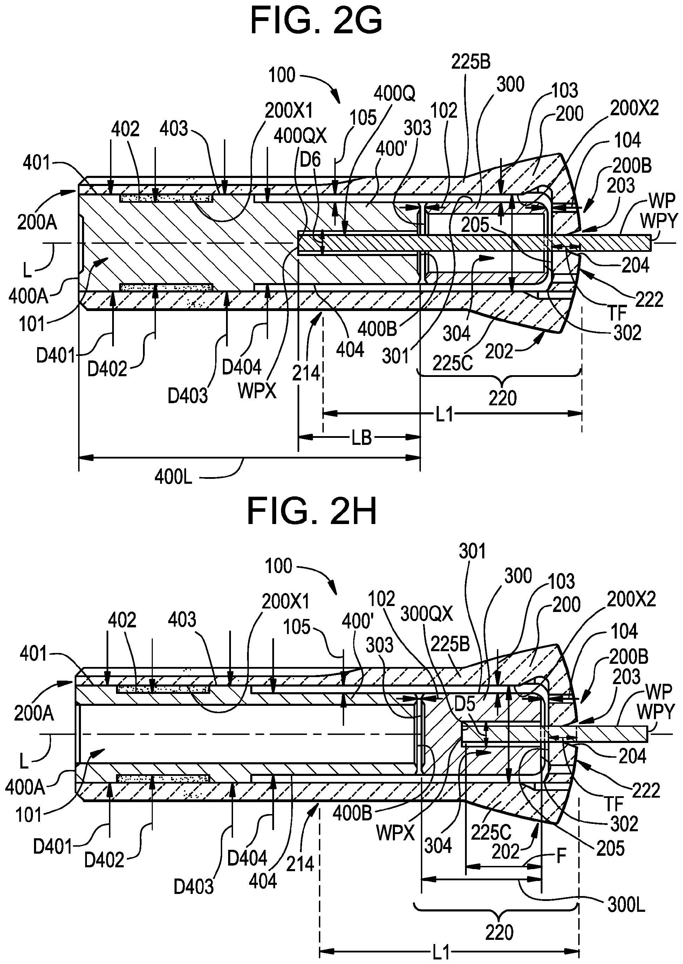

The ring shown in FIG. 2H is similar to the ring 300 shown in FIG. 2E except that the ring 300 shown in FIG. 2H is axially retained by the hollow sleeve 400, whereas the ring 300 shown in FIG. 2E is axially retained by the cylindrical surface 501 of the pin 500.

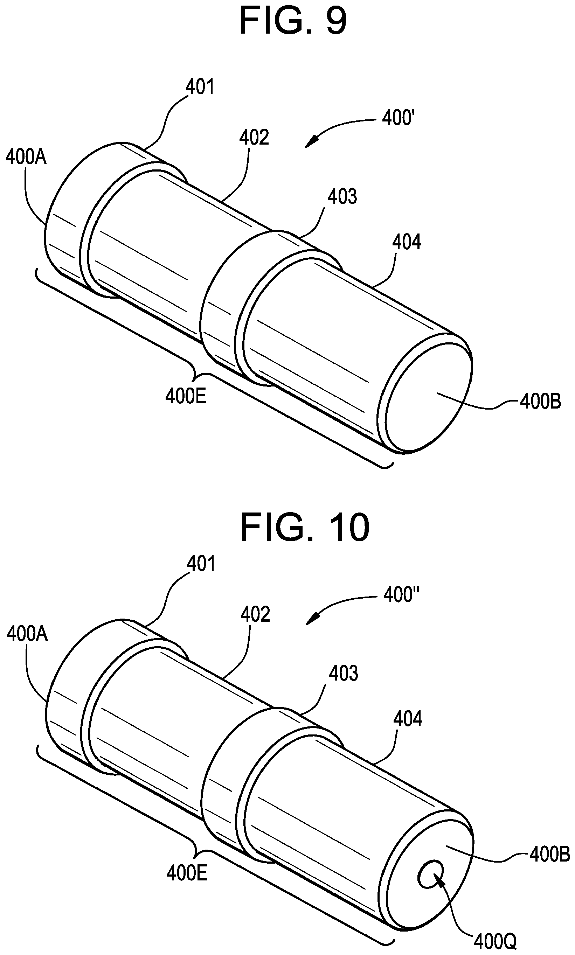

While the ring axial end stop 300QX is shown and described with reference to FIG. 2E as limiting axial movement and establishing a predetermined axial position of the work piece WP, examples are not limited in this regard as other configurations are included, for example, the configurations shown in FIGS. 2F, 2G, 9 and 10. For example, as shown in FIGS. 2G and 10, the sleeve 400" is substantially solid and has a sleeve bore 400Q that extends axially therein from the second axial sleeve end 400B towards and terminating between the first axial sleeve end 400A and the second axial sleeve end 400B. The sleeve bore 400Q has an inside diameter D6 that is greater than or equal to the inside diameter D3 of the clamping surface 203. The sleeve bore 400Q has an axial depth LB and terminates at a sleeve axial end stop 400QX (e.g., axial limit stop). The sleeve axial end stop 400QX has utility in limiting axial movement and establishing the predetermined axial position of the work piece WP in the collet 200'. The axial depth LB of the sleeve bore 400Q is selected based upon the length of the work piece WP and the extent to which the work piece WP is required to extend axially out of the collet 200'. The axial depth LP has a magnitude of zero to one hundred percent of an overall axial length 400L of the sleeve 400. For example, when the axial depth LB is equal to one hundred percent of the overall axial length 400L of the sleeve, the sleeve bore 400Q extends entirely through the sleeve 400 and is equivalent to the sleeve 406 shown in FIG. 2A. When the axial depth LB is equal to zero percent of the overall axial length 400L of the sleeve 400, the sleeve bore 400Q is eliminated and the sleeve 400' is a solid cylinder as shown in FIG. 2F.

While the sleeve 400" is shown and described as having the sleeve bore 400Q, examples are not limited in this regard, as other configurations are included, for example, the sleeve 400' illustrated in FIGS. 2F and 9 in which the sleeve is solid with no sleeve bore and the second axial end 400B is the end stop or axial limit stop that limits axial movement and establishing the predetermined axial position of the work piece WP in the collet 200'.

As shown in FIG. 3B, the clamping surface 203 in the split flange 222 in an unclamped state has an inside diameter D3 and the clamping surface 203 is defined by: (a) radially inward facing circumferential concave arcuate surfaces 203A1 and 203A2 of the first flange section 222A; (b) radially inward facing circumferential concave arcuate surfaces 203B1 and 203B2 of the second flange section 222B; and (c) radially inward facing circumferential concave arcuate surfaces 203C1 and 203C2 of the third flange section 222C. In the unclamped state illustrated in FIG. 3B, an exterior surface WPE of the workpiece WP is spaced apart from the radially inward facing circumferential concave arcuate surfaces 203A1, 203A2, 203B1, 203B2, 203C1 and 203C2 by a gap GWP. In the clamped state illustrated in FIG. 3C, the first flange section 222A, the second flange section 222B and the third flange section 222C are flexed radially inward such that the radially inward facing circumferential concave arcuate surfaces 203A1, 203A2, 203B1, 203B2, 203C1 and 203C2 engage exterior surface WPE thereby clamping the workpiece WP in the split flange 222. In the clamped state, a predetermined force is applied to a workpiece by the first axial leg 225A, the second axial leg 225B and the third axial leg 225C such that the workpiece is maintained coaxial with an axis of rotation of the collet 200.

In the example shown in FIG. 2A, a ring bore 304 and sleeve bore 406 define a bore 101 (i.e., through bore) within the collet assembly 100. Referring to FIG. 2B, the bore 101 of the collet assembly 100 allows a workpiece WP (see FIG. 3C) to pass through the clamping surface 203 into the bore 101 of the collet assembly 100.

Referring to FIGS. 2A and 2B, the flexible collet assembly 100 defines a first axial gap 102 between the ring 300 and the sleeve 400. The first axial gap 102 between the ring 300 and the sleeve 400 allows a small axial movement of the ring 300 relative to the collet 200 and the sleeve 400. A second axial gap 104 is defined between the ring 300 and the axial flange-surface 205 of the collet 200. The second axial gap 104 allows a small axial movement of the ring 300.

Referring to FIG. 3A, the split flange 222 formed from the first flange portion 222A, the second flange portion 222B and the third flange portion 222C has an outer radius R1. The first circumferential opening 230A, the fourth circumferential opening 230B and the seventh circumferential opening 230C are located equidistant from the clamping surface 203. Each of the first circumferential opening 230A, the fourth circumferential opening 230B and the seventh circumferential opening 230C are located a radial distance R3 from the center of the flange 222. The first circumferential opening 230A is centered on and extends along an arc having a degree measure of α1. The fourth circumferential opening 230B is centered on and extends along an arc having a degree measure of α2. The seventh circumferential opening 230C is centered on and extends along an arc having a degree measure of α3. In the example shown in FIG. 3A, the degree measures of α1, α2 and α3 are substantially the same and each having a magnitude of approximately eighty degrees. The degree measure of α1, α2 and α3 are between forty-five degrees and one hundred and twenty degrees.

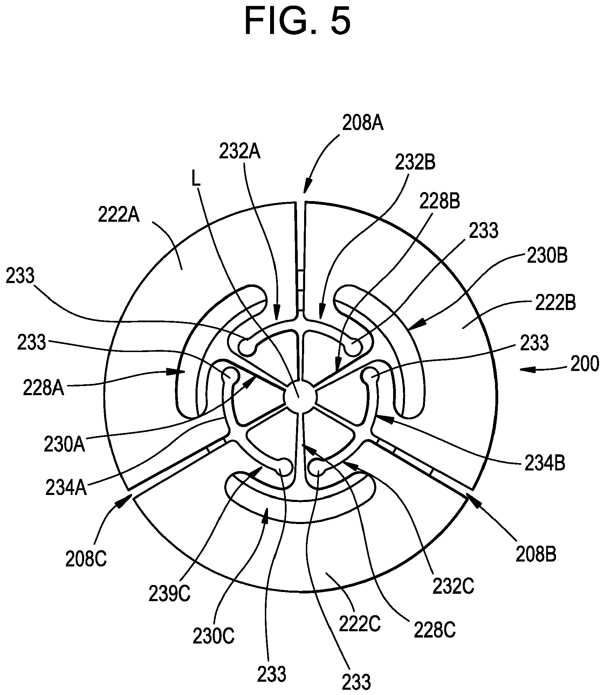

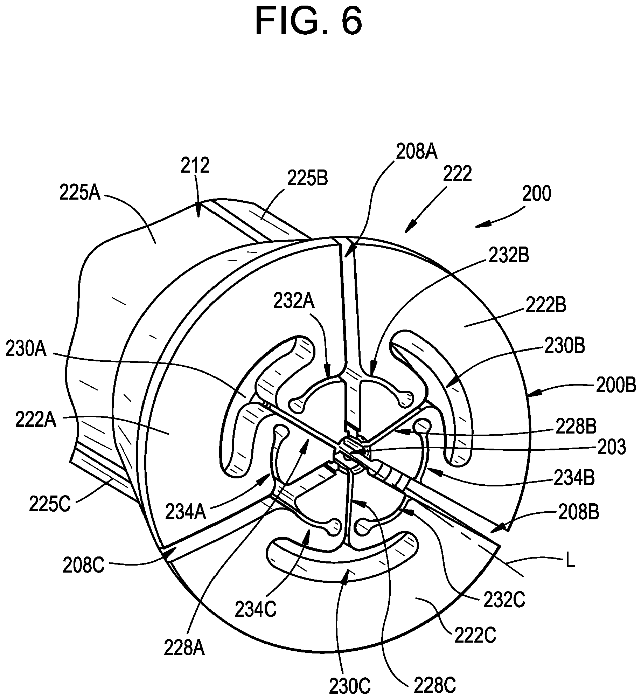

Referring to FIG. 3A, the second circumferential opening 232A, the third circumferential opening 234A, the fifth circumferential opening 232B, the sixth circumferential opening 234B, the eighth circumferential opening 232C and the ninth circumferential opening 234C are located equidistant from the clamping surface 203. The second circumferential opening 232A, the third circumferential opening 234A, the fifth circumferential opening 232B, the sixth circumferential opening 234B, the eighth circumferential opening 232C and the ninth circumferential opening 234C are located a radial distance R2 from the center of the flange 222 and each terminate circumferentially in an arcuate (e.g., circular) cross-sectional shaped bore 233 (see FIG. 3A) that is slightly larger in diameter than the respective thicknesses T4, T5, T6, T7, T8 and T9. In the example shown in FIGS. 5 and 6, R1 is greater than R3, which is greater than R2. As a result, the first circumferential opening 230A, the fourth circumferential opening 230B and the seventh circumferential opening 230C are located radially outward from the second circumferential opening 232A, the third circumferential opening 234A, the fifth circumferential opening 232B, the sixth circumferential opening 234B, the eighth circumferential opening 232C and the ninth circumferential opening 234C.

In the example shown in FIGS. 5 and 6, the ratio of R2 to R1 is approximately 0.35 and the ratio of R3 to R1 is approximately 0.50. In the example shown in FIG. 3A, the second circumferential opening 232A and the fifth circumferential opening 232B are centered on and extend along an arc having a degree measure of β1. The sixth circumferential opening 234B and the eighth circumferential opening 232C are centered on and extend along an arc having a degree measure of β2. The ninth circumferential opening 234C and the third circumferential opening 234A are centered on and extend along an arc having a degree measure of β3. In the example shown in FIG. 3A, the degree measures of β1, β2 and β3 are substantially the same and approximately equal to one hundred and ten degrees. In the example shown in FIGS. 1-6, the degree measure of β1, β2 and β3 are between ninety degrees and one hundred and forty degrees.

Referring to FIG. 3A, the first circumferential opening 230A has a thickness T1, the fourth circumferential opening 230B has a thickness T2 and the seventh circumferential opening 230C has a thickness T3. In the example shown in FIG. 3A, T1, T2 and T3 are substantially equal. The second circumferential opening 232A has a thickness T4, the third circumferential opening 234A has a thickness T5, the fifth circumferential opening 232B has a thickness T6, the sixth circumferential opening 234B has a thickness T7, the eighth circumferential opening 232C has a thickness T8, and the ninth circumferential opening 234C has a thickness T9. In the example shown in FIG. 3A, T4, T5, T6, T7, T8 and T9 are substantially equal. In the example shown in FIG. 3A, the ratio of the thickness T4 to T1 is approximately 0.27.

Referring to FIGS. 1, 3 and 6, the flexible head 220 of the collet 200 has three first frontal openings in the form of the first circumferential opening 230A, the fourth circumferential opening 230B and the seventh circumferential opening 230C; six second frontal openings in the form of the second circumferential opening 232A, the fifth circumferential opening 232B, the sixth circumferential opening 234B, the eighth circumferential opening 232C, the ninth circumferential opening 234C and the third circumferential opening 234A; and three flexible legs in the form of the first axial leg 225A, the second axial leg 225B and the third axial leg 225C. In the example shown in FIG. 6, one first frontal opening (first circumferential opening 230A, fourth circumferential opening 230B and/or seventh circumferential opening 230C) and two second frontal opening (i.e., second circumferential opening 232A, fifth circumferential opening 232B, sixth circumferential opening 234B, eighth circumferential opening 232C, ninth circumferential opening 234C and/or third circumferential opening 234A) are each disposed proximate to one of the flexible legs 225A, 225B, or 225C of the collet 200.

A method of transmitting a force using the collet assembly 100, 100', includes limiting the radial stiffness of the collet assembly 100, 100', reducing the orientation influence on a workpiece retained within the collet assembly 100, 100' and transmitting predominantly a torque to the work piece. The method involves transforming an axial movement into a radial movement or transforming an axial force into a radial force and controlling the radial clamping force by flexibly deforming the head of the split flange 222 of the collet 200.

The following clauses that are listed as items represent further examples in addition to other examples described herein.
Item 1 - A flexible collet (200) comprising: a tubular body (212) extending from a first axial collet end (200A) to a second axial collet end (200B) thereof, a hoop section (212H) of the tubular body (212) proximate the first axial collet end (200A) extending axially from the first axial collet end (200A) to an intermediate location (214) between the first axial collet end (200A) and the second axial collet end (200B), a first axial leg (225A) and a second axial leg (225B) each extending from the intermediate location (214) to the second axial collet end (200B), the first axial leg (225A) and second axial leg (225B) spaced apart from each other; and a holding section (220) located proximate the second axial collet end (200B), the holding section defined (220) by a flange (222) extending radially inward from an exterior surface of the tubular body (212) and terminating at a clamping surface (203).
Item 2 - The flexible collet of item 1, wherein the flange (222) comprises a first flange section (222A) extending from the first axial leg (225A) and a second flange section (222B) extending from the second axial leg (225B), the first flange section (222A) and the second flange section (222B) spaced apart from each other, and at least one of the first flange section (222A) and the second flange section (222B) having at least one circumferentially extending opening (230A, 230B, 230C, 232A, 232B, 232C, 234A, 234B, 234C) extending axially therethrough.
Item 3 - The flexible collet (200) of item 2, further comprising: a third axial leg (225C) extending axially from the intermediate location (214) to the second axial collet end (200B), the first axial leg (225A) and the second axial leg (225B) spaced apart from one another by a first axial slot (208A), the second axial leg (225B) and the third axial leg (225C) spaced apart from one another by a second axial slot (208B) and the third axial leg (225C) and the first axial leg (225A) are spaced apart from one another by a third axial slot (208C).
Item 4 - The flexible collet (200) of item 3, further comprising: a third flange section (222C) extending from the third axial leg (225C), the first flange section (222A) and the second flange section (222B) spaced apart from one another by the first axial slot (208A), the second flange section (222B) and the third flange section (222C) spaced apart from one another by the second axial slot (208B) and the third flange section (222C) and the first flange section (222A) spaced apart from one another by the third axial slot (208C).
Item 5 - The flexible collet (200) of item 4, further comprising at least one of: (i)
   the first flange section (222A) having a first radial gap (228A) extending outwardly from the clamping surface (203), (ii) the second flange section (222B) having a second radial gap (228B) extending outwardly from the clamping surface (203), and (iii) the third flange section (222C) having a third radial gap (228C) extending outwardly from the clamping surface (203), wherein the at least one circumferentially extending opening comprises at least one of: (a) a first circumferential opening (230A) in the first flange section (222A) and located between and spaced apart from the first axial slot (208A) and the third axial slot (208C); (b) a second circumferential opening (232A) in the first flange section (222A) and extending circumferentially from the first slot (208A) towards and terminating prior to the first radial gap (228A); (c) a third circumferential opening (234A) in the first flange section (222A) and extending circumferentially from the third axial slot (208C) towards and terminating prior to the first radial gap (228A); (d) a fourth circumferential opening (230B) in the second flange section (222B) and located between and spaced apart from the first axial slot (208A) and the second axial slot (208B); (e) a fifth circumferential opening (232B) in the second flange section (222B) and extending circumferentially from the first axial slot (208A) towards and terminating prior to the second radial gap (228B); (f) a sixth circumferential opening (234B) in the second flange section (222B) and extending circumferentially from the second axial slot (208B) towards and terminating prior to the second radial gap (228B); (g) a seventh circumferential opening (230C) in the third flange section (222C) and located between and spaced apart from the second axial slot (208B) and the third axial slot (208C); (h) an eighth circumferential opening (232C) in the third flange section (222C) and extending circumferentially from the second axial slot (208B) towards and terminating prior to the third radial gap (228C); and (i) a ninth circumferential opening (234C) in the third flange section (222C) and extending circumferentially from the third axial slot (208C) towards and terminating prior to the third radial gap (228C).
Item 6 - The flexible collet (200) of item 5, wherein the first circumferential opening (230A), the fourth circumferential opening (230B) and the seventh circumferential opening (230C) are located equidistant from the clamping surface (203).
Item 7 - The flexible collet (200) of item 5, wherein the second circumferential opening (232A), the third circumferential opening (234A), the fifth circumferential opening (232B), the sixth circumferential opening (234B), the eighth circumferential opening (232C) and the ninth circumferential opening (234C) are located equidistant from the clamping surface (203).
Item 8 - The flexible collet (200) of item 5, wherein the first circumferential opening (230A), the fourth circumferential opening (230B) and the seventh circumferential opening (230C) are located radially outward from the second circumferential opening (232A), the third circumferential opening (234A), the fifth circumferential opening (232B), the sixth circumferential opening (234B), the eighth circumferential opening (232C) and the ninth circumferential opening (234C).
Item 9 - The flexible collet (200) of item 1, wherein at least one of the first axial leg (225A) and the second axial leg (225B) have an axial length (L1); and the flange (222) having an axial thickness (TF), the axial thickness (TF) is less than the axial length (L1).
Item 10 - The flexible collet (200) of item 1, wherein the hoop section (212H) is annular with a continuous cylindrical first interior surface (200X1).
Item 11 - A collet assembly (100) for retaining a workpiece, the collet assembly comprising: a collet (200) according to claim 1, wherein the first axial leg (225A) and the second axial leg (225B) define a second interior surface (200X2) extending from the intermediate location (214) towards the second collet end (200B); a ring (300) having a ring exterior surface (301), the ring (300) disposed in the collet bore (201B) proximate the flange (222); in an unclamped state the second interior surface (200X2) is spaced apart from the ring exterior surface (301) by a first annular gap (103); and in a clamped state the first axial leg (225A) and the second axial leg (225B) are flexed radially inward such that the second interior surface (200X2) engages the ring exterior surface (301) so that the first annular gap (103) is reduced to zero to limit the radially inward movement of the first axial leg (225A) and the second axial leg (225B) and to establish a predetermined force applied to a workpiece held by the first axial leg (225A) and the second axial leg (225B) such that the workpiece is maintained coaxial with an axis of rotation of the collet (200).
Item 12 - The collet assembly (100) of item 11, further comprising an axial limit-stop (400, 500), the flange having an axial flange-surface (205) facing towards the first axial collet end (200A); and the ring (300) positioned between the axial limit-stop (400, 500) and the axial flange-surface (205) to limit axial movement of the ring (300) relative to the axial limit stop (400, 500) and the axial flange-surface (205).
Item 13 - The collet assembly (100) of item 12, wherein the axial limit-stop (400) comprises a sleeve (400) defining a sleeve bore (406) extending from a first axial sleeve end (400A) to a second axial sleeve end (400B), the sleeve (400) having an exterior circumferential surface (400E) defined by a first raised surfaces (401), a second raised surface (403), a first recess (402) and a second recess (404), wherein the first recess (402) is positioned between the first raised surface (401) and the second raised surface (403); the first raised surface (401) and the second raised surface (403) engaging a first interior surface (200X1) of the hoop section (212H); and a second annular gap (105) defined between the second recess (403) and the second interior surface (200X2), the second annular gap (105) configured to accommodate radially inward flexure of the first axial leg (225A) and the second axial leg (225B) in a clamped state.
Item 14 - The collet assembly (100) of item 13, further comprising a first annular gap (107) defined between the first recess (402) and the first interior surface (200X1); and an adhesive (107A) disposed in the first annular gap (107) to secure the sleeve (400) to the hoop section (212H) of the tubular body (212) defined by the collet (200).
Item 15 - The collet assembly (100) of item 12, wherein the axial limit-stop (400) comprises a pin (500) extending through a radial hole (211) extending through the collet (200').
Item 16 - The collet assembly of item 11, wherein the ring (300) comprises a ring axial end stop (300QX) that is configured to limit axial movement and establish a predetermined axial position of a work piece (WP) in the collet.
Item 17 - The collet assembly of item 13, wherein the sleeve (400) comprises a sleeve axial end stop (400QX) that is configured to limit axial movement and establish a predetermined axial position of a work piece (WP) in the collet.
Item 18 - A method of transmitting a force using a collet assembly, the method comprising: limiting radial stiffness of the collet assembly; reducing orientation influence on a workpiece; and transmitting a force to the workpiece, wherein the force is a torque force.
Item 19 - The method of item 18, further comprising transforming an axial movement into a radial movement or transforming an axial force into a radial force and controlling the radial clamping force by flexibly deforming a head of the collet.
Item 20 - A collet assembly for retaining a workpiece, the collet assembly comprising a collet having a sleeve retained within the collet, wherein the collet has reduced radial stiffness and reduced orientation influence on the workpiece, and the collet transmits a force to the workpiece that is predominantly a torque force.
Item 21 - The collet assembly of item 20, wherein the collet transforms a radial clamping force into a radial compression on a flexible head of the collet, the radial compression on the flexible head generates a clamping force on the workpiece and the collet deviates a supplement radial clamping force on the ring through a first back bore diameter of the collet and an end stop diameter of the ring.
Item 22 - The collet assembly of item 20, further comprising a ring defining a through bore within the collet, the ring disposed proximate the sleeve.
Item 23 - The collet assembly of item 20, wherein the collet is a collet attachment.
Item 24 - The collet assembly of item 20, further comprising a pin.
Item 25 - The collet assembly of item 20, further comprising a flexible head including at least one first frontal opening and at least one second frontal opening and the collet comprising at least one flexible leg, wherein the at least one first frontal opening and the at least one second frontal opening are disposed on the at least one flexible leg of the collet.
Item 26 - The collet assembly of item 20, wherein the collet further comprises a radially flexible head.
Item 27 - The collet assembly of item 21, wherein the collet further comprises a first back bore diameter, wherein the first back bore diameter limits a radial clamping movement of the collet.
Item 28 - The collet assembly of item 21, wherein the collet comprises a clamping diameter and a clamping stiffness and reducing the clamping diameter reduces clamping stiffness.
Item 29 - The collet assembly of item 21, wherein the collet comprises a dead length collet.
Item 30 - The collet assembly of item 28, wherein the clamping diameter has a cross section defined by at least one of an eccentric circle, a square, or a hexagon.
Item 31 - The collet assembly of item 21, wherein an axial clamping movement or an axial clamping force of a clamping device of a machine tool controls a radial clamping movement of the collet.
Item 32 - The collet assembly of item 22, wherein the ring comprises an end stop diameter that limits a radial clamping movement of the collet.
Item 33 - The collet assembly of item 22, wherein the ring is axially disposed between a rear head face of the collet and a third axial face of the sleeve.
Item 34 - The collet assembly of item 22, wherein the collet assembly further comprises a pin, and the ring is axially disposed between a rear head face of the collet and a cylinder surface of the pin.
Item 35 - The collet assembly of item 21, further comprising a ring defining a first axial surface within the collet, the ring disposed proximate the sleeve and the first axial surface providing an axial end-stop for the workpiece.
Item 36 - The collet assembly of item 21, wherein the sleeve (400) defining a second axial surface within the collet (200) and the second axial surface providing as axial end-stop for the workpiece.

Although the invention is described with reference to particular embodiments thereof, it will be understood by one of ordinary skill in the art, upon a reading and understanding of the foregoing disclosure that numerous variations and alterations to the disclosed embodiments will fall within the scope of this invention and of the appended claims. Table 1 below provides a listing of the reference numbers used in the figures and detailed description, a brief description of what the element number refers to, the functionality of the what the element number refers to, the clamping configuration, contact type, other reference numbers that the component contacts and a list of Figures that the element number appear in.

**TABLE 1**

| Ref | description | Functionality (Appears of Figures) | Clamping configuration | Contact type | Other contact reference |
|---|---|---|---|---|---|
| **100/** | **Flexible collet** | **According Detailed Description** | - | - | - |
| **100'** | **assembly** | **(****FIGS. 1A, 1b****,** **2A, 2B****/** **FIG. 2C****)** | | | |
| 101 | Through bore | Allows passing through with the workpiece WP behind the collet clamping surface 203 (FIG. 2A) | all | free | - |
| 102 | First axial gap | Allows a small axial movement of the ring 300 | - | - | 303 |
| | | (FIGS. 2A and 2B) | | | 400B or 501 |
| 103 | First annular gap | Limits the radial clamping movement of the | - | - | 206 |
| | | collet 200, defines the clamping force transmitted on the workpiece according to the size of the gap (FIGS. 2A and 2B) | | | 301 |
| 104 | Second axial gap | Allows a small axial movement of the ring 300 | - | - | 205 |
| | | (FIGS. 2A and 2B) | | | 302 |
| 105 | Second annular gap | Allows radial clamping movement of the collet 200 | - | - | 206 |
| | | (FIGS. 2A and 2B) | | | 404 |
| 106 | Cylindrical guiding zone | Guides the sleeve 400 in the collet 200 | all | guiding | 207 |
| | | (FIG. 2B) | | | 403 |
| 107 | First annular gap or glue zone | Space for glue the sleeve 400 into the collet 200 | all | bearing (glue) | 207 |
| | | (FIG. 2B) | | | 402 |
| 108 | cylindrical guiding zone | Guides the sleeve 400 in the collet 200 | all | guiding | 207 |
| | | (FIG. 2B) | | | 401 |
| | | | | | |
| **200/** | **Flexible collet** | **Main element of the flexible collet assembly 100, clamps the workpiece (not shown) by elastic deformation, contains the ring 300, the sleeve 400 or the pin 500** | **-** | **-** | **300** |
| **200'** | | | | | **400 or 500** |
| | | | | | **Workpiece (not shown)** |
| | | **(****FIGS. 1A, 1B****,** **2A, 2B****,** **3A****,** **3B****,** **3C****,** **4****,** **5** **and** **6****/** **FIG. 2C****)** | | | |
| 201 | Collet guiding | Centers the collet 200 precisely in the collet | all | guiding | Collet adapter |
| | diameter | adapter (not shown) in clamped and unclamped position. | | | (not shown) |
| | | (FIG. 4) | | | |
| 202 | Collet clamping taper | Centers the collet 200 according to the collet adapter (not shown). Transforms the axial clamping movement in a radial clamping movement | clamped | bearing | Collet adapter |
| | | | unclamped empty clamped | free bearing | (not shown) |
| | | (FIGS. 1A, 2A, and 2B) | | | |
| 203/ | Collet clamping | Centers and holds the workpiece | clamped | bearing | Workpiece |
| 203' | surface | (FIGS. 1A, 2A, 2B, 3A, 3B, 3C, 4, 5 and 6/ FIG. 2C) | unclamped | guiding or free | Workpiece |
| | | | empty clamped | free | - |
| 204/ | Collet lead-in | Makes it easier to load the workpiece, prevents frontal collision between the collet 200 and the workpiece while loading the workpiece | all | free | - |
| 204' | taper | | | | |
| | | FIG. 2A, and 2B/ FIG. 2C) | | | |
| 205/ | Axial flange surface (axially inward facing toward the first axial end of the collet, commonly referred to as the rear head face) | Keeps the ring 300 axially in place and limits the length of the collet clamping surface 203 | all | guiding | (104) |
| 205' | | | | | 302 |
| | | (FIG. 2A, 2B, 4/ FIG. 2C) | | | |
| 206 | First back bore diameter | Limits the radial clamping movement of the collet 200, defines the clamping force transmitted on the workpiece according to the size of the first annular gap 103 | clamped | bearing | 301 |
| | | | unclamped | free | (103) |
| | | | empty clamped | bearing | 301 |
| | | (FIG. 2B) | | | |
| 207 | Second back bore diameter | Guides and centers the sleeve 400 | all | guiding | (108) 401 |
| | | Contact surface for glue in annular gap (glue zone) 107 | | bearing (glue) | (107) 402 |
| | | (FIG. 2B) | | guiding | (106) 403 |
| 208A, 208B, 208C | Slot | Spits the collet 200 in at least two flexible legs what allows the collet 200 to collapse radially inwards for clamping the workpiece | all | free | - |
| | | (FIGS. 1A, 3A, 3B, 3C, 4) | | | |
| 230A, 230B and 230C | Circumferential openings (Referred to in the priority document as the First frontal opening 209) | Makes the head of the collet 200 elastically deformable in radial direction (FIGS. 1A, 3A, 3B, 3C, 4) | all | free | - |
| 232A, 234A, 232B, 234B, 232C, 234C | Circumferential openings | Makes the head of the collet 200 elastically deformable in radial direction | all | free | - |
| | (referred to in the priority document as Second frontal opening 210) | (FIGS. 1A, 3A, 3B, 3C, 4) | | | |
| 211 | Radial hole (referred to in the priority document as a Pin bore) | Guides and fixes the pin 500 in the collet 200 (FIG.2C) | all | bearing | 501 |
| | | | | | |
| **300** | **Ring** | **Limits the radial clamping movement and defines the clamping force** | **-** | **-** | **200** |
| | | | | | **400 or 500** |
| | | (FIG. 7) | | | |
| 301 | Ring Exterior surface (referred to in the priority | Limits the radial clamping movement of the collet 200, defines the clamping force transmitted | clamped | bearing | 206 |
| | | | unclamped | free | (103) |
| | | | empty clamped | bearing | 206 |
| | document as the End stop diameter) | on the workpiece according to the size of the first annular gap 103 | | | |
| | | (FIG. 7) | | | |
| 302 | First ring end (Referred to in the priority document as the First axial face) | Keeps the ring 300 axially in place | all | guiding | (104) |
| | | (FIG. 7) | | | 205 |
| 303 | Second ring end (referred to in the priority document as the Second axial face) | Keeps the ring 300 axially in place | all | guiding | (102) |
| | | (FIG. 7) | | | 400B or 501 |
| 304 | Ring bore (e.g., Ring through bore) | Allows passing through with the workpiece behind the collet clamping surface 203 | all | free | - |
| | | (FIG. 7) | | | |
| | | | | | |
| **400** | **Sleeve** | **Keeps the ring 300 axially in place** | - | - | **200** |
| | | (FIG. 8) | | | **300** |
| 401 | first raised surface having an outside diameter D401 (referred to in the priority document as the First guiding diameter) | Guides and centers the sleeve 400 | all | Guiding | (108) |
| | | (FIGS. 2B and 8) | | | 207 |
| 402 | First recess having an outside diameter D402 (referred to in the priority document as the Glue diameter) | Contact surface for glue | all | - | (107) |
| | | (FIGS. 2B and 8) | | free | 207 |
| 403 | Second raised surface having an outside diameter D403 (referred to in the priority document as the Second guiding diameter) | Guides and centers the sleeve 400 | all | Guiding | (106) |
| | | (FIGS. 2B and 8) | | | 207 |
| 404 | Second recess having an outside diameter D404 (referred to in the priority document | Allows radial clamping movement of the collet 200 | all | free | (105) |
| | | (FIGS. 2B and 8) | | | 206 |
| | as the Third guiding diameter) | | | | |
| 400A | First axial sleeve end | Is flush with the first axial collet end 200A of the collet 200. | | | |
| | | (FIG. 2B) | | | |
| 400B | Second axial sleeve end (Referred to in the priority document as the Third axial face 405) | Keeps the ring 300 axially in place | all | guiding | (102) |
| | | (FIG. 2B) | | | 303 |
| 406 | Sleeve bore (e.g., Sleeve through bore) | Allows passing through with the workpiece behind the collet clamping surface 203 and the ring through bore 304 | all | free | - |
| | | (FIG. 8) | | | |
| | | | | | |
| **500** | **Axial limit-stop (e.g., pin)** | **Alternative fixation of the ring 300 instead of the sleeve 400** | **-** | **-** | **200** |
| | | (FIG. 2C) | | | **300** |
| 501 | Cylindrical surface | Guides and fixes the pin in the collet 200 Keeps the ring 300 axially in place | all | bearing | 211 |
| | | | | guiding | (102) 303 |
| | | (FIG. 2C) | | | |

## Claims

1. A flexible collet (200) comprising:
a tubular body (212) extending from a first axial collet end (200A) to a second axial collet end (200B) thereof, a hoop section (212H) of the tubular body (212) proximate the first axial collet end (200A) extending axially from the first axial collet end (200A) to an intermediate location (214) between the first axial collet end (200A) and the second axial collet end (200B),
a first axial leg (225A) and a second axial leg (225B) each extending from the intermediate location (214) to the second axial collet end (200B), the first axial leg (225A) and second axial leg (225B) spaced apart from each other; and
a holding section (220) located proximate the second axial collet end (200B), the holding section defined (220) by a flange (222) extending radially inward from an exterior surface of the tubular body (212) and terminating at a clamping surface (203).

2. The flexible collet of claim 1, wherein the flange (222) comprises a first flange section (222A) extending from the first axial leg (225A) and a second flange section (222B) extending from the second axial leg (225B), the first flange section (222A) and the second flange section (222B) spaced apart from each other, and
at least one of the first flange section (222A) and the second flange section (222B) having at least one circumferentially extending opening (230A, 230B, 230C, 232A, 232B, 232C, 234A, 234B, 234C) extending axially therethrough.

3. The flexible collet (200) according to any one of the previous claims, further comprising:
a third axial leg (225C) extending axially from the intermediate location (214) to the second axial collet end (200B), the first axial leg (225A) and the second axial leg (225B) spaced apart from one another by a first axial slot (208A), the second axial leg (225B) and the third axial leg (225C) spaced apart from one another by a second axial slot (208B) and the third axial leg (225C) and the first axial leg (225A) are spaced apart from one another by a third axial slot (208C).

4. The flexible collet (200) of claim 3, further comprising:
a third flange section (222C) extending from the third axial leg (225C), the first flange section (222A) and the second flange section (222B) spaced apart from one another by the first axial slot (208A), the second flange section (222B) and the third flange section (222C) spaced apart from one another by the second axial slot (208B) and the third flange section (222C) and the first flange section (222A) spaced apart from one another by the third axial slot (208C).

5. The flexible collet (200) of claim 4, further comprising at least one of:
(i) the first flange section (222A) having a first radial gap (228A) extending outwardly from the clamping surface (203),
(ii) the second flange section (222B) having a second radial gap (228B) extending outwardly from the clamping surface (203), and
(iii) the third flange section (222C) having a third radial gap (228C) extending outwardly from the clamping surface (203),
wherein the at least one circumferentially extending opening comprises at least one of:
(a) a first circumferential opening (230A) in the first flange section (222A) and located between and spaced apart from the first axial slot (208A) and the third axial slot (208C);
(b) a second circumferential opening (232A) in the first flange section (222A) and extending circumferentially from the first slot (208A) towards and terminating prior to the first radial gap (228A);
(c) a third circumferential opening (234A) in the first flange section (222A) and extending circumferentially from the third axial slot (208C) towards and terminating prior to the first radial gap (228A);
(d) a fourth circumferential opening (230B) in the second flange section (222B) and located between and spaced apart from the first axial slot (208A) and the second axial slot (208B);
(e) a fifth circumferential opening (232B) in the second flange section (222B) and extending circumferentially from the first axial slot (208A) towards and terminating prior to the second radial gap (228B);
(f) a sixth circumferential opening (234B) in the second flange section (222B) and extending circumferentially from the second axial slot (208B) towards and terminating prior to the second radial gap (228B);
(g) a seventh circumferential opening (230C) in the third flange section (222C) and located between and spaced apart from the second axial slot (208B) and the third axial slot (208C);
(h) an eighth circumferential opening (232C) in the third flange section (222C) and extending circumferentially from the second axial slot (208B) towards and terminating prior to the third radial gap (228C); and
(i) a ninth circumferential opening (234C) in the third flange section (222C) and extending circumferentially from the third axial slot (208C) towards and terminating prior to the third radial gap (228C).

6. The flexible collet (200) of claim 5, wherein the first circumferential opening (230A), the fourth circumferential opening (230B) and the seventh circumferential opening (230C) are located equidistant from the clamping surface (203).

7. The flexible collet (200) according to any one of claims 5-6, wherein the second circumferential opening (232A), the third circumferential opening (234A), the fifth circumferential opening (232B), the sixth circumferential opening (234B), the eighth circumferential opening (232C) and the ninth circumferential opening (234C) are located equidistant from the clamping surface (203).

8. The flexible collet (200) according to any one of claims 5-7, wherein the first circumferential opening (230A), the fourth circumferential opening (230B) and the seventh circumferential opening (230C) are located radially outward from the second circumferential opening (232A), the third circumferential opening (234A), the fifth circumferential opening (232B), the sixth circumferential opening (234B), the eighth circumferential opening (232C) and the ninth circumferential opening (234C).

9. The flexible collet (200) according to any one of the preceding claims, wherein at least one of the first axial leg (225A) and the second axial leg (225B) have an axial length (L1); and
the flange (222) having an axial thickness (TF), the axial thickness (TF) is less than the axial length (L1).

10. The flexible collet (200) according to any one of the preceding claims, wherein the hoop section (212H) is annular with a continuous cylindrical first interior surface (200X1)

11. A collet assembly (100) for retaining a workpiece, the collet assembly comprising:
a collet (200) according to any one of claims 1 to 10, wherein the first axial leg (225A) and the second axial leg (225B) define a second interior surface (200X2) extending from the intermediate location (214) towards the second collet end (200B);
a ring (300) having a ring exterior surface (301), the ring (300) disposed in the collet bore (201B) proximate the flange (222);
in an unclamped state the second interior surface (200X2) is spaced apart from the ring exterior surface (301) by a first annular gap (103); and
in a clamped state the first axial leg (225A) and the second axial leg (225B) are flexed radially inward such that the second interior surface (200X2) engages the ring exterior surface (301) so that the first annular gap (103) is reduced to zero to limit the radially inward movement of the first axial leg (225A) and the second axial leg (225B) and to establish a predetermined force applied to a workpiece held by the first axial leg (225A) and the second axial leg (225B) such that the workpiece is maintained coaxial with an axis of rotation of the collet (200).

12. The collet assembly (100) of claim 11, further comprising an axial limit-stop (400, 500), the flange having an axial flange-surface (205) facing towards the first axial collet end (200A); and
the ring (300) positioned between the axial limit-stop (400, 500) and the axial flange-surface (205) to limit axial movement of the ring (300) relative to the axial limit stop (400, 500) and the axial flange-surface (205).

13. The collet assembly (100) of claim 12, wherein the axial limit-stop (400) comprises a sleeve (400) defining a sleeve bore (406) extending from a first axial sleeve end (400A) to a second axial sleeve end (400B), the sleeve (400) having an exterior circumferential surface (400E) defined by a first raised surfaces (401), a second raised surface (403), a first recess (402) and a second recess (404), wherein the first recess (402) is positioned between the first raised surface (401) and the second raised surface (403);
the first raised surface (401) and the second raised surface (403) engaging a first interior surface (200X1) of the hoop section (212H); and
a second annular gap (105) defined between the second recess (403) and the second interior surface (200X2), the second annular gap (105) configured to accommodate radially inward flexure of the first axial leg (225A) and the second axial leg (225B) in a clamped state.

14. The collet assembly (100) of claim 13, further comprising a first annular gap (107) defined between the first recess (402) and the first interior surface (200X1); and
an adhesive (107A) disposed in the first annular gap (107) to secure the sleeve (400) to the hoop section (212H) of the tubular body (212) defined by the collet (200).

15. The collet assembly (100) of claim 12, wherein the axial limit-stop (400, 500) comprises a pin (500) extending through a radial hole (211) extending through the collet (200'.

16. The collet assembly of claim 11, wherein the ring (300) comprises a ring axial end stop (300QX) that is configured to limit axial movement and establish a predetermined axial position of a work piece (WP) in the collet.

17. The collet assembly of claim 13, wherein the sleeve (400) comprises a sleeve axial end stop (400QX) that is configured to limit axial movement and establish a predetermined axial position of a work piece (WP) in the collet.
